# EUROPÄISCHE PATENTSCHRIFT

(11) **EP 1 462 826 B1**
(45) Veröffentlichungstag und Bekanntmachung des Hinweises auf die Patenterteilung: **07.02.2007**
(21) Anmeldenummer: 03100830.3
(22) Anmeldetag: 28.03.2003
(51) Int. Cl.: G02B 5/20, G02B 7/00, G03B 42/08

(54) **Vorrichtung zum Erfassen von in einer Phosphorschicht enthaltenen Bildinformationen**
Device for reading image information from a phosphor layer
Dispositif pour la lecture d'information d'image à partir d'une couche de phosphore

(43) Veröffentlichungstag der Anmeldung: 29.09.2004
(73) Patentinhaber: Agfa-Gevaert HealthCare GmbH, 51373 Leverkusen (DE)
(72) Erfinder: Reiser, Georg Dr., 80337, München (DE); Thoma, Ralph Dr., 86167, Augsburg (DE); Lind, Martin, 80809, München (DE); Schulz, Christian, , Hyogo 669-1324 (JP)

(56) Entgegenhaltungen:
- EP-A- 0 702 483
- US-A- 4 258 264
- US-A- 4 369 367
- DRISCOLL, WALTER G.: "Handbook of Optics" 1978 , MCGRAW-HILL , NEW YORK XP002250125 047710 * Seite 8-10 - Seite 8-11 * * Seite 8-38 *
- PATENT ABSTRACTS OF JAPAN vol. 2000, no. 11, 3. Januar 2001 (2001-01-03) & JP 2000 235108 A (OLYMPUS OPTICAL CO LTD), 29. August 2000 (2000-08-29)
- PATENT ABSTRACTS OF JAPAN vol. 2002, no. 03, 3. April 2002 (2002-04-03) & JP 2001 324615 A (MATSUSHITA ELECTRIC IND CO LTD), 22. November 2001 (2001-11-22)

## Beschreibung

Die Erfindung betrifft eine Vorrichtung zum Erfassen von in einer Phosphorschicht enthaltenen Informationen gemäß dem Oberbegriff des Anspruchs 1.

Röntgenaufnahmen werden, insbesondere für medizinische Zwecke, unter Verwendung von Phosphorschichten aufgezeichnet, wobei die durch ein Objekt, beispielsweise einen Patienten, hindurchtretende Röntgenstrahlung als latentes Bild in der Phosphorschicht gespeichert wird. Zum Auslesen des latenten Bildes wird die Phosphorschicht mit Anregungslicht bestrahlt, wodurch diese entsprechend dem latenten Bild Emissionslicht aussendet, welches von einem optischen Detektor erfasst und in elektrische Signale umgewandelt wird. Die elektrischen Signale können nach Bedarf weiterverarbeitet und auf einem Monitor dargestellt oder an einem entsprechenden Ausgabegerät, wie z. B. einem Drucker, ausgegeben werden.

Die deutsche Patentschrift DE 198 59 747 C1 hat eine solche Vorrichtung zum Gegenstand, wobei zwischen der Phosphorschicht und dem Detektor Reflexionsschichten zur Reflexion des Anregungslichts vorgesehen sind. Zusätzlich zu den Reflexionsschichten kann ein das Anregungslicht absorbierendes Absorptionsfilter in den Strahlengang zwischen Phosphorschicht und Detektor eingebracht werden. Durch die Reflexion bzw. Absorption des Anregungslichts wird verhindert, dass dieses den Detektor erreichen und in Folge dessen die Erfassung des von der Phosphorschicht ausgehenden Emissionslichts verfälschen kann.

Mit dieser bekannten Filtereinrichtung können hohe Kontraste, d. h. Unterschiede in der Durchlässigkeit der Filtereinrichtung für Emissionslicht im Verhältnis zum Anregungslicht, erreicht werden. Hohe Kontraste sind bei den beschriebenen Anwendungen deshalb erforderlich, weil das in der Phosphorschicht angeregte Emissionslicht im Allgemeinen eine um mehrere Größenordnungen geringere Intensität aufweist als das Anregungslicht und bei nicht ausreichend hohen Kontrasten die Erfassung des Emissionslichts verfälschen würde. Daher kann es in bestimmten Anwendungsfällen, beispielsweise bei der Verwendung von bestimmten Detektortypen oder von bestimmten Arten von Phosphorschichten, wünschenswert sein, noch höhere Kontraste zu erzielen, um eine noch höhere Zuverlässigkeit bei der Erfassung des Emissionslichts zu gewährleisten.

Es ist Aufgabe der vorliegenden Erfindung, eine Vorrichtung zum Erfassen von in einer Phosphorschicht enthaltenen Informationen anzugeben, bei welcher eine möglichst hohe Zuverlässigkeit bei der Erfassung des Emissionslichts gewährleistet ist.

Diese Aufgabe wird durch die Vorrichtung gemäß Anspruch 1 gelöst.

Die Erfindung basiert auf dem Gedanken, die Filtereinrichtung nicht nur im Wellenlängenbereich des Anregungslichts, sondern zusätzlich in einem Bereich oberhalb des Wellenlängenbereichs des Anregungslichts undurchlässig auszugestalten. Dadurch wird das Verhältnis des durch die Filtereinrichtung transmittierten Emissionslichts zu Lichtanteilen im Wellenlängenbereich und oberhalb des Wellenlängenbereichs des Anregungslichts - und damit der Kontrast- erhöht.

Im Sinne der Erfindung ist die Filtereinrichtung bei einer Wellenlänge undurchlässig bzw. durchlässig, wenn sie bei dieser Wellenlänge einen Transmissionsgrad von unter 10⁻³, insbesondere unter 10⁻⁴, bzw. von über 0,1, insbesondere über 0,7, aufweist. Bei solchen Unterschieden in den Transmissionsgraden im ersten Wellenlängenbereich im Vergleich zum zweiten und dritten Wellenlängenbereich werden hohe Kontraste erreicht.

Die erfindungsgemäß ausgestaltete Filtereinrichtung ist insbesondere in Kombination mit Detektoren, wie z. B. CCD-Sensoren, von Vorteil, die einen breiten Empfindlichkeitsbereich aufweisen und daher auch Lichtanteile in Wellenlängenbereichen oberhalb des Anregungslichts mit einer hohen Empfindlichkeit erfassen können. Diese Lichtanteile werden jedoch von der erfindungsgemäßen Filtereinrichtung so stark abgeschwächt, daß sie die Erfassung des Emissionslichts nicht mehr verfälschen. Solche Lichtanteile treten beispielsweise dann auf, wenn Lichtquellen mit spektralen Anteilen oberhalb der eigentlichen Anregungslichtwellenlängen eingesetzt werden. Solche Lichtanteile können auch von unerwünschter Fluoreszenzstrahlung herrühren, welche - neben dem eigentlichen zu erfassenden Emissionslicht - in der Phosphorschicht angeregt wird und in Wellenlängenbereichen oberhalb der Anregungslichtwellenlängen liegt.

Die Filtereinrichtung umfasst mindestens zwei Filterelemente, wobei mindestens ein erstes der Filterelemente im ersten Wellenlängenbereich des Emissionslichts durchlässig und im zweiten Wellenlängenbereich des Anregungslichts undurchlässig ist und mindestens ein zweites der Filterelemente im ersten Wellenlängenbereich des Emissionslichts durchlässig und im dritten Wellenlängenbereich, welcher bei größeren Wellenlängen liegt als der zweite Wellenlängenbereich des Anregungslichts, undurchlässig ist. Durch die Kombination unterschiedlicher Filterelemente mit derartigen Filtercharakteristiken wird erreicht, daß der Kontrast im Vergleich zu einem einzelnen Filterelement, welches herstellungsbedingt meist in nur einem relativ schmalen Wellenlängenbereich undurchlässig ist, weiter erhöht wird.

Die Filterelemente sind als Absorptionsfilter ausgebildet in welchen Licht im zweiten Wellenlängenbereich bzw. im dritten Wellenlängenbereich absorbiert wird. Durch die Kombination von zwei oder mehreren Absorptionsfiltern werden im Vergleich mit den häufig verwendeten Reflexionsfiltern besonders niedrige Transmissionsgrade der Filtereinrichtung im zweiten und dritten Wellenlängenbereich erreicht, wodurch der Kontrast noch weiter erhöht wird.

Erfindungsgemäß ist vorgesehen, dass mindestens eines der Filterelemente eine erste Reflexionsschicht aufweist, welche für Licht in einem vierten Wellenlängenbereich undurchlässig ist, welcher bei größeren Wellenlängen liegt als der zweite Wellenlängenbereich und welcher insbesondere mit dem zweiten Wellenlängenbereich teilweise überlappt. Zusätzlich kann mindestens eines der Filterelemente eine zweite Reflexionsschicht aufweisen, welche für Licht in einem fünften Wellenlängenbereich undurchlässig ist, welcher bei größeren Wellenlängen liegt als der zweite Wellenlängenbereich und welcher insbesondere mit dem dritten Wellenlängenbereich und/oder vierten Wellenlängenbereich teilweise überlappt. Durch eine oder mehrere erste und/oder zweite Reflexionsschichten wird die Durchlässigkeit der Filtereinrichtung in wenigstens einem weiteren Wellenlängenbereich, welcher zwischen dem zweiten und dritten Wellenlängenbereich liegt, herabgesetzt, was insgesamt zu einer weiteren Kontrasterhöhung führt.

Die Filterelemente sind vorzugsweise durch Kleben miteinander verbunden. Dies erfolgt insbesondere mittels einer zwischen den einzelnen Filterelementen liegenden Schicht aus Klebstoff oder Kitt mit einer hohen Durchlässigkeit im Wellenlängenbereich des Emissionslichts. Alternativ kann die Klebeschicht nur in Teilbereichen der Filterelemente ausgebildet sein. Darüber hinaus kann das Material der Schicht eine niedrige Durchlässigkeit für Licht im Wellenlängenbereich des Anregungslichts aufweisen, wodurch eine zusätzliche Schwächung unerwünschter Lichtanteile erreicht werden kann. Durch die Schicht aus Klebstoff bzw. Kitt werden - im Vergleich zu einer dazwischen liegenden Schicht aus Luft - Reflexionsverluste aufgrund geringerer Unterschiede der Brechungsindizes an den Grenzflächen der Filterelemente vermindert, so daß eine hohe Durchlässigkeit im Wellenlängenbereich des Emissionslichts gewährleistet ist.

Alternativ können die Filter mittels Ansprengen miteinander verbunden werden, wobei die Oberflächen der Filterelemente ausreichend glatt poliert sind, so dass diese bei Kontakt miteinander aufgrund atomarer oder molekularer Kohäsionskräfte zusammen gehalten werden. Bei dieser einfachen Verbindungstechnik wird das gesamte Transmissionsverhalten der Filtereinrichtung nicht durch zusätzliche Kitt- oder Kleberschichten beeinflusst.

Die Filterelemente können alternativ oder zusätzlich auch mittels einer mechanischen Halteeinrichtung zusammengehalten werden. Durch eine mechanische Verbindung der Filterelemente wird allgemein ein kompakter und robuster Aufbau erreicht. Die Halteeinrichtung ist vorzugsweise als ein im Randbereich der Filterelemente verlaufender, gegebenenfalls unterbrochener Rahmen ausgebildet. Hierdurch ist ein mechanischer Zusammenhalt auf einfache Weise realisierbar.

Bei einer weiteren bevorzugten Ausgestaltung der Erfindung ist vorgesehen, daß die Filtereinrichtung am Detektor angebracht ist, um einen möglichst kompakten Aufbau der Vorrichtung zu erhalten. Die Filtereinrichtung kann, analog zu den im Zusammenhang mit den Filterelementen genannten Verbindungstechniken, durch Kleben oder durch eine mechanische Halteeinrichtung, wie z. B. einen Rahmen, mit dem Detektor verbunden sein.

Absorptionsfilter mit unterschiedlichem spektralen Absorptionsverhalten weisen im Allgemeinen unterschiedliche thermische Ausdehnungskoeffizienten auf. In solchen Fällen würde eine Verbindung von zwei oder mehreren unterschiedlichen Filterelementen dazu führen, dass sich die ganze Filtereinrichtung aufgrund der unterschiedlichen thermischen Ausdehnung der Filterelemente bei Temperaturschwankungen verbiegen würde. Dieser bei Bimetallen ausgenutzte Effekt würde bei den hier vorliegenden optischen Anwendungen zu unerwünschten Effekten führen, wie z.B. einem veränderten Absorptionsverhalten aufgrund von Spannungen in den Filterelementen, erhöhten Reflexionsverlusten an den Oberflächen der Filterelemente und Verspannungen in den mit der Filtereinrichtung verbundenen Komponenten der Vorrichtung. Letzteres ist insbesondere bei einer mit einem Detektor verbundenen Filtereinrichtung von Nachteil, da bei einer Verbiegung der Filtereinrichtung entweder der Detektor verbogen wird oder dieser zumindest hohen Spannungen ausgesetzt ist, was dessen Empfindlichkeit und folglich die Zuverlässigkeit beim Erfassen des Emissionslichts herabsetzen kann.

In einer bevorzugten Ausführungsform der Erfindung ist daher vorgesehen, dass mindestens drei der Filterelemente miteinander verbunden sind und mindestens zwei der miteinander verbundenen Filterelemente unterschiedliche thermische Ausdehnungskoeffizienten aufweisen, wobei die miteinander verbundenen Filterelemente derart angeordnet sind, dass mindestens zwei Filterelement-Paare aus jeweils zwei Filterelementen mit unterschiedlichen thermischen Ausdehnungskoeffizienten erhalten werden und Biegekräfte, welche bei Temperaturänderungen in den einzelnen Filterelement-Paaren auftreten, gegeneinander wirken und sich insbesondere gegenseitig aufheben. Hierdurch wird eine Verbiegung der Filtereinrichtung aufgrund von Temperaturschwankungen reduziert oder verhindert.

Vorzugsweise sind die Filterelemente derart hintereinander angeordnet sind, dass die Abfolge der thermischen Ausdehnungskoeffizienten und/oder der Dicken der Filterelemente symmetrisch ist. Insbesondere kann vorgesehen sein, dass zwischen mindestens zwei ersten Filterelementen mit jeweils einem ersten thermischen Ausdehnungskoeffizienten mindestens ein zweites Filterelement mit einem zweiten thermischen Ausdehnungskoeffizienten angeordnet ist. Die Dicken der ersten Filterelemente liegen vorzugsweise in derselben Größenordnung und sind insbesondere gleich. Alternativ oder zusätzlich liegen auch die Dicken der zweiten Filterelemente in derselben Größenordnung und sind insbesondere gleich. Jede einzelne dieser Maßnahmen trägt zur verbesserten Verminderung bzw. Kompensation etwaiger Biegekräfte bei. Eine Kombination einzelner Maßnahmen führt zu einer entsprechend zuverlässigeren Verminderung bzw. Kompensation von Biegekräften.

Die Erfindung wird nachfolgend an Hand von Figuren näher erläutert.

Es zeigen:
- Fig. 1: ein Ausführungsbeispiel der erfindungsgemäßen Vorrichtung;
- Fig. 2: Beispiele für den spektralen Transmissionsgrad der Filtereinrichtung sowie einzelner Filterelemente und Reflexionsschichten;
- Fig. 3 a - d: Ausführungsbeispiele einer aus zwei Filterelementen zusammengesetzten Filtereinrichtung;
- Fig. 4 a - c: Ausführungsbeispiele einer aus drei Filterelementen zusammengesetzten Filtereinrichtung; und
- Fig. 5 a - f: Ausführungsbeispiele von aus drei bis fünf Filterelementen zusammengesetzten Filtereinrichtungen.

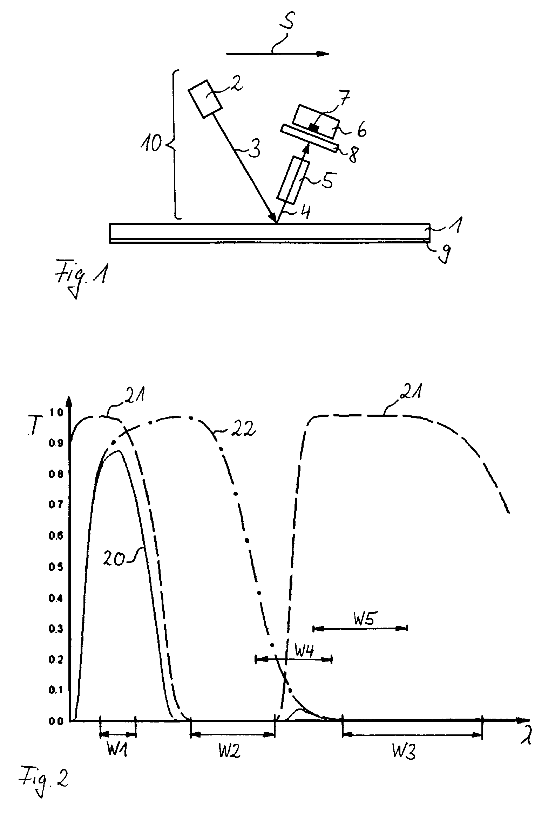

Fig. 1 zeigt ein Ausführungsbeispiel der erfindungsgemäßen Vorrichtung. Das in einer Phosphorschicht 1 gespeicherte latente Röntgenbild wird mittels eines Scankopfes 10 erfaßt, welcher in Scanrichtung S über die Phosphorschicht 1 bewegt wird. In weiteren Ausgestaltungen kann zusätzlich oder alternativ zum Scankopf 10 auch die Phosphorschicht 1 bewegt werden, wodurch ebenfalls unterschiedliche Bereiche der Phosphorschicht 1 erfaßt werden können. Zur mechanischen Stabilisierung der Phosphorschicht 1 ist diese auf eine Trägerschicht 9 aufgebracht.

Von einer Lichtquelle 2 ausgehendes Anregungslicht 3 trifft auf die Phosphorschicht 1 und regt auf und/oder in der Phosphorschicht 1 Emissionslicht 4 an, welches mittels einer lichtleitenden oder fokussierenden Optik 5 zu einem Detektor 6 geleitet bzw. auf den Detektor 6 fokussiert wird.

Zwischen der Phosphorschicht 1 und dem Detektor 6 ist eine Filtereinrichtung 8 angeordnet, welche in einem ersten Wellenlängenbereich des Emissionslichts 4 eine hohe Durchlässigkeit aufweist und in einem zweiten Wellenlängenbereich des Anregungslichts 3 im Wesentlichen undurchlässig ist, d. h. eine nur sehr niedrige Durchlässigkeit für Anregungslicht 3 aufweist. Die Filtereinrichtung 8 ist so ausgestaltet, dass sie zusätzlich in mindestens einem weiteren Wellenlängenbereich, welcher bei größeren Wellenlängen liegt als der zweite Wellenlängenbereich des Anregungslichts 3, undurchlässig ist. Die Filtereinrichtung 8 ist vorzugsweise am Detektor 6 angebracht, um einen möglichst kompakten Aufbau zu erhalten.

Durch die derart ausgestaltete Filtereinrichtung 8 wird erreicht, dass weder an der Phosphorschicht 1 und/oder Trägerschicht 9 reflektiertes Anregungslicht 3, noch Licht im dritten Wellenlängenbereich oberhalb des Wellenlängenbereichs des Anregungslichts zum Detektor 6 gelangen kann.

Lichtanteile im dritten Wellenlängenbereich rühren beispielsweise von längerwelligen Anteilen im Strahlungsspektrum der Lichtquelle 2 her, welche für die Anregung von Emissionslicht 4 in der Phosphorschicht 1 nicht vorgesehen oder nicht geeignet sind. Darüber hinaus können solche Lichtanteile bei bestimmten Arten von Phosphorschichten auftreten, bei denen durch das Anregungslicht 3 - neben dem zu erfassenden Emissionslicht 4 bei kleineren Wellenlängen als das Anregungslicht - zusätzlich Fluoreszenzlicht bei größeren Wellenlängen als das Anregungslicht 3 anregt wird. Solche längerwelligen Fluoreszenzlichtanteile sind jedoch unerwünscht, da sie im Allgemeinen keine Bildinformation beinhalten und zu einer Verfälschung der zu erfassenden Bildinformation führen.

Durch die entsprechend ausgestaltete Filtereinrichtung 8 wird im Wesentlichen nur noch das von der Phosphorschicht 1 ausgehende Emissionslicht 4 im ersten Wellenlängenbereich erfasst, so daß eine hohe Zuverlässigkeit und Genauigkeit bei der Erfassung des Emissionslichts 4 gewährleistet ist.

Die Lichtquelle 2 weist vorzugsweise Laserdioden auf, welche entlang einer senkrecht zur Figurenebene verlaufenden Zeile in der Weise angeordnet sind, dass sich die von den einzelnen Laserdioden ausgehenden divergenten Lichtstrahlenbündel überlagern und auf der Phosphorschicht 1 einen linien- oder streifenförmigen Bereich parallel zur Richtung der Zeile beleuchten. Optional kann zur Fokussierung des Anregungslichts 3 eine in Richtung der Zeile verlaufende Zylinderlinse vorgesehen sein, welche einerseits eine Fokussierung des Anregungslichts 3 auf die Phosphorschicht 1 bewirkt und andererseits eine Überlagerung der Einzelstrahlen benachbarter Laserdioden in Zeilenrichtung ermöglicht. Auf diese Weise wird auf der Phosphorschicht 1 eine nur schmale Linie mit in Zeilenrichtung im Wesentlichen konstanter Intensität beleuchtet. Anstelle von Laserdioden kann die Lichtquelle 2 auch andere Leuchtmittel, insbesondere intensitätsstarke Leuchtdioden (LEDs), in zeilenförmiger Anordnung aufweisen.

Der Detektor 6 umfasst lichtempfindliche Elemente 7, vorzugsweise ein oder mehrere lineare CCD-Arrays, welche in einer senkrecht zur Figurenebene verlaufenenden Zeile angeordnet sind. Alternativ können als lichtempfindliche Elemente 7 auch Fotodiodenzeilen verwendet werden.

In dem hier dargestellten Ausführungsbeispiel sind sowohl die Lichtquelle 2 als auch der Detektor 6 auf einer Seite der Phosphorschicht 1 angeordnet. In Anwendungsfällen, in denen die Trägerschicht 9 transparent ist, kann die Lichtquelle 2 auch im Bereich einer Seite der Phosphorschicht 1 und der Detektor 6 im Bereich der gegenüberliegenden Seite der Phosphorschicht 1 angeordnet sein. Bei dieser Ausführungsform kann die Filtereinrichtung 8 entweder zwischen Phosphorschicht 1 und Detektor 6 angeordnet oder aber an der transparenten Trägerschicht 9 angebracht oder in diese integriert sein.

In einer alternativen Ausgestaltung der Erfindung kann die Vorrichtung als sogenanntes Flying Spot-System ausgebildet sein. Die Lichtquelle 2 umfaßt bei dieser Ausgestaltung einen Laser und einen rotierenden Polygonspiegel, an welchem der Laserstrahl 3 des Lasers zur Phosphorschicht 1 hin reflektiert wird. Infolge der Rotation des Polygonspiegels überstreicht der Laserstrahl 3 dabei unterschiedliche Stellen auf der Phosphorschicht 1, die aufeinanderfolgend jeweils zur Emission von Lumineszenzlicht angeregt werden. Das von den angeregten Stellen auf der Phosphorschicht ausgehende Emissionslicht wird von einem Detektor 6 e r-faßt. Der Detektor 6 kann für eine ortsaufgelöste oder eine nicht ortsaufgelöste Erfassung ausgelegt sein. In letzterem Fall werden als Detektor 6 vorzugsweise eine oder mehrere Photomultiplier-Röhren (PMT) verwendet. Die Filtereinrichtung 8 ist auch bei dieser Ausführung zwischen Phosphorschicht 1 und Detektor 6 angeordnet, um das von der Phosphorschicht 1 ausgehende Licht 4 vor dessen Erfassung durch den Detektor 6 entsprechend zu filtern. Als lichtleitende oder fokussierende Optik 5 können beispielsweise Lichtleitfasern eingesetzt werden, welche das von den unterschiedlichen Stellen der Phosphorschicht 1 ausgehende Licht 4 zum Detektor 6 hin führen.

Erfindungsgemäß umfasst die Filtereinrichtung 8 mindestens zwei unterschiedliche Filterelemente, wobei mindestens ein erstes der Filterelemente im ersten Wellenlängenbereich des Emissionslichts 4 durchlässig und im zweiten Wellenlängenbereich des Anregungslichts 3 undurchlässig ist und mindestens ein zweites der Filterelemente im ersten Wellenlängenbereich des Emissionslichts 4 durchlässig und im dritten Wellenlängenbereich oberhalb des zweiten Wellenlängenbereichs des Anregungslichts 3 undurchlässig ist. Hierdurch wird ein höherer Kontrast, d.h. eine höhere Durchlässigkeit für Emissionslicht 4 im Verhältnis zur Durchlässigkeit für Anregungslicht 3 einschließlich Lichtanteilen mit höheren Wellenlängen, erreicht als dies im Allgemeinen bei Filtereinrichtungen aus nur einem Filterelement der Fall ist.

Figur 2 zeigt Beispiele für den spektralen Transmissionsgrad einer Filtereinrichtung 8 sowie einzelner Filterelemente. In dem Diagramm ist der jeweilige Transmissionsgrad T in Abhängigkeit von der Wellenlänge λ dargestellt. Die Transmissionskurve 21 des ersten Filterelements zeigt im ersten Wellenlängenbereich W1 des Emissionslichts eine sehr hohe Durchlässigkeit und im zweiten Wellenlängenbereich W2 des Anregungslichts eine sehr niedrige Durchlässigkeit, die jedoch zu höheren Wellenlängen hin wieder ansteigt. Die Transmissionskurve 22 des zweiten Filterelements zeigt im ersten Wellenlängenbereich W1 ebenfalls eine sehr hohe Durchlässigkeit, welche erst in einem dritten Wellenlängenbereich W3, welcher bei größeren Wellenlängen liegt als der zweite Wellenlängenbereich W2 des Anregungslichts, auf sehr niedrige Werte abfällt.

Wie dem Diagramm zu entnehmen ist, liegt der erste Wellenlängenbereich W1 des Emissionslichts vorzugsweise bei kürzeren Wellenlängen als der zweite Wellenlängenbereich W2 des Anregungslichts.

Der erste Wellenlängenbereich W1 liegt vorzugsweise zwischen etwa 380 nm und 420 nm, da in diesem Bereich bei den meisten Arten von Phosphorschichten der größte Anteil des Emissionslichts emittiert wird. Der zweite Wellenlängenbereich W2 liegt zwischen 520 nm und 700 nm, insbesondere zwischen 630 nm und 690 nm. Bei der Verwendung von Laserdioden als Lichtquelle liegt der weitaus größte Anteil des abgegebenen Anregungslichts in einem schmalen Wellenlängenbereich um die Laserwellenlänge, vorzugsweise 660 nm. Der Transmissionsgrad T im zweiten Wellenlängenbereich W2 des Anregungslichts liegt vorzugsweise unter 10⁻⁸, damit das Anregungslicht, welches eine meist um mehrere Größenordnungen höhere Intensität im Verhältnis zu dem zu erfassenden Emissionslicht aufweist, besonders zuverlässig abgeschwächt wird.

Die Filterelemente sind vorzugsweise als Absorptionsfilter ausgebildet, welche das Licht im zweiten Wellenlängenbereich W2 des Anregungslichts bzw. im dritten Wellenlängenbereich W3 absorbieren. Als Absorptionsfilter werden optische Filter aus Glas oder Kunststoff mit lichtabsorbierenden ionischen und/oder anorganischen Verbindungen verwendet.

Durch die Kombination von mindestens zwei als Absorptionsfilter ausgebildeten Filterelementen mit jeweils unterschiedlichem spektralen Absorptionsverhalten lassen sich besonders hohe Kontraste des durchgelassenen Emissionslichts im ersten Wellenlängenbereich W1 im Verhältnis zu den im zweiten und dritten Wellenlängenbereich W2 und W3 durchgelassenen Lichtanteilen erzielen.

Für die ersten und zweiten Filterelemente sind beispielsweise Absorptionsfilter der Firma SCHOTT GLAS, D-55122 Mainz, Germany, mit der Produktbezeichnung BG 3, BG 4 und BG 12 bzw. BG 18, BG 39 und BG 42 geeignet.

Durch Kombination des ersten und des zweiten Filterelements in der Filtereinrichtung wird schließlich die Transmissionskurve 20 der Filtereinrichtung erhalten, welche hohe Transmissionsgrade im ersten Wellenlängenbereich W1 aufweist und sowohl für Licht im Wellenlängenbereich W2 des Anregungslichts als auch im dritten Wellenlängenbereich W3 oberhalb des Wellenlängenbereichs W2 u n-durchlässig ist.

Zur weiteren Kontrasterhöhung ist mindestens eines der Filterelemente mit einer ersten Reflexionsschicht versehen, welche Licht in einem vierten Wellenlängenbereich W4 größtenteils reflektiert und dadurch für Licht in diesem Wellenlängenbereich im Wesentlichen undurchlässig ist. Der vierte Wellenlängenbereich W4 liegt bei größeren Wellenlängen als der zweite Wellenlängenbereich W2, überlappt insbesondere mit diesem und liegt vorzugsweise zwischen etwa 650 nm und 780 nm. Auf die explizite Darstellung der Transmissionskurve der ersten Reflexionsschicht wurde aus Gründen der besseren Übersichtlichkeit verzichtet. Durch die erste Reflexionsschicht kann die Durchlässigkeit der Filtereinrichtung zusätzlich in einem weiteren Wellenlängenbereich herabgesetzt werden, um auch dort ausreichend geringe Transmissionsgrade T zu erreichen. Erfindungsgemäß ist dies der zwischen den Wellenlängenbereichen W2 und W3 liegende Wellenlängenbereich.

Zusätzlich zur ersten Reflexionsschicht kann mindestens eines der Filterelemente eine zweite Reflexionsschicht aufweisen, welche Licht in einem fünften Wellenlängenbereich W5 größtenteils reflektiert und dadurch für Licht in diesem Wellenlängenbereich im Wesentlichen undurchlässig ist. Der fünfte Wellenlängenbereich liegt bei größeren Wellenlängen als der zweite Wellenlängenbereich W2 des Anregungslichts und überlappt insbesondere mit dem dritten und/oder vierten Wellenlängenbereich W3 bzw. W4 zumindest teilweise. Vorzugsweise liegt der fünfte Wellenlängenbereich W5 zwischen etwa 750 nm und 910 nm. Auch die zweite Reflexionsschicht führt zu einer zusätzlichen Verminderung der Durchlässigkeit der Filtereinrichtung in einem Wellenlängenbereich zwischen dem zweiten Wellenlängenbereich und dritten Wellenlängenbereich W2 und W3. Auch hier wurde die explizite Darstellung der Transmissionskurve der zweiten Reflexionsschicht aus Gründen der Übersichtlichkeit weggelassen.

Bei den verwendeten Reflexionsschichten handelt es sich um Schichtsysteme aus mehreren dünnen dielektrischen Schichten mit jeweils unterschiedlichen Brechungsindizes und Dicken. Das auf ein solches Schichtsystem treffende Licht wird aufgrund von Interferenzeffekten je nach Einfallswinkel und Wellenlänge reflektiert oder transmittiert.

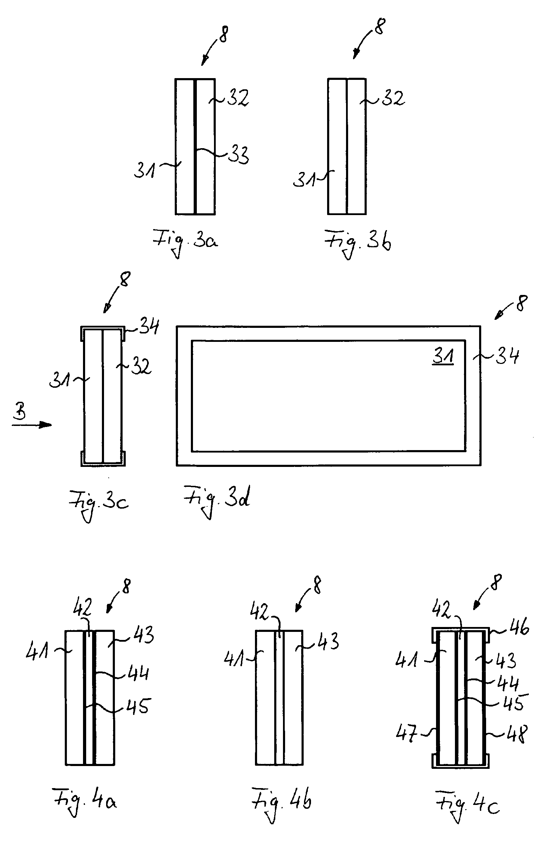

Figur 3 zeigt Ausführungsbeispiele einer aus zwei Filterelementen zusammengesetzten Filtereinrichtung.

Bei dem in Figur 3 a im Querschnitt dargestellten Beispiel einer Filtereinrichtung 8 sind ein erstes Filterelement 31 und ein zweites Filterelement 32 durch eine Schicht 33 aus Klebstoff oder Kitt mit einer hohen Durchlässigkeit im ersten Wellenlängenbereich W1 des Emissionslichts miteinander verklebt. Vorzugsweise weist das Material der Schicht 33 eine niedrige Durchlässigkeit für Licht im zweiten und/oder dritten Wellenlängenbereich W2 bzw. W3 auf. Durch die Schicht 33 aus Klebstoff bzw. Kitt werden - im Vergleich zu einer Schicht aus Luft- Reflexionsverluste aufgrund geringerer Unterschiede der Brechungsindizes an den Grenzflächen der Filterelemente 31 und 32 zur Schicht 33 vermindert, so daß eine hohe Durchlässigkeit im ersten Wellenlängenbereich W1 des Emissionslichts gewährleistet ist.

In einer alternativen Ausgestaltung in Figur 3 b sind die beiden Filterelemente 31 und 32 der Filtereinrichtung 8 durch Ansprengen miteinander verbunden. Hierzu werden die Oberflächen der Filterelemente 31 und 32 glatt poliert, so dass diese bei Kontakt miteinander aufgrund atomarer oder molekularer Kohäsionskräfte zusammen gehalten werden. Bei dieser einfachen Verbindungstechnik wird das gesamte Transmissionsverhalten der Filtereinrichtung 8 nicht durch zusätzliche Kittoder Kleberschichten beeinflusst.

In Figur 3 c ist ein weiteres Ausführungsbeispiel einer Filtereinrichtung 8 im Querschnitt dargestellt, bei welcher die Filterelemente durch einen im Randbereich der beiden Filterelemente 31 und 32 verlaufenden Rahmen 34 zusammen gehalten werden. Figur 3 d zeigt eine Aufsicht auf eine derartige Filtereinrichtung 8 in Blickrichtung B. Wie zu erkennen ist, verläuft der hier dargestellte Rahmen 34 entlang des gesamten Randbereichs der beiden Filterelemente 31 und 32. Je nach Anwendungsfall kann es ausreichend sein, wenn ein entsprechender Rahmen 34 lediglich in bestimmten Abschnitten des Randbereichs verläuft, beispielsweise im Bereich von einzelnen Ecken der Filtereinrichtung 8. In Form eines solchen Rahmens wird ein besonders robuster Zusammenhalt der einzelnen Filterelemente 31 und 32 gewährleistet.

Im Hinblick auf die bevorzugten optischen Eigenschaften der ersten und zweiten Filterelemente 31 bzw. 32 gelten die Ausführungen im Zusammenhang mit den Figuren 1 und 2 entsprechend.

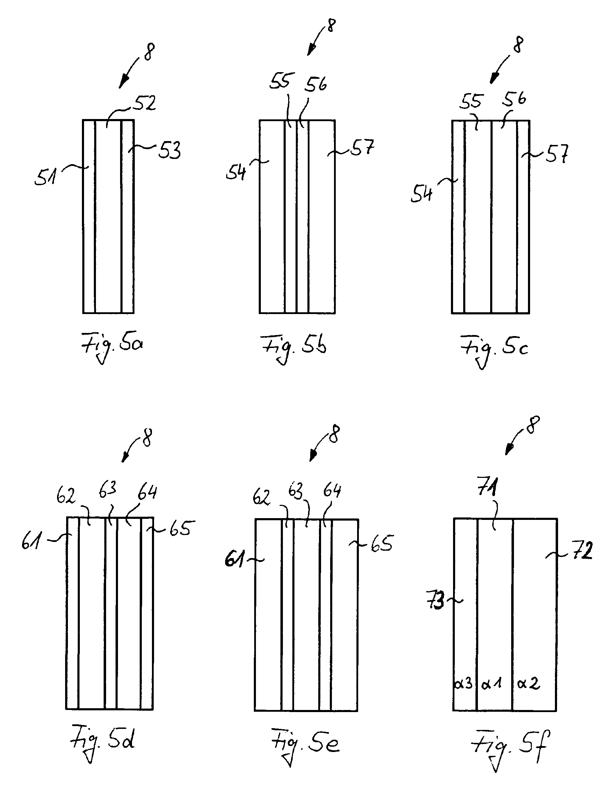

Die Figur 4 zeigt unterschiedliche Ausführungsbeispiele einer aus drei Filterelementen zusammengesetzten Filtereinrichtung jeweils im Querschnitt.

Im Beispiel der Figur 4 a ist zwischen zwei ersten Filterelementen 41 und 43 ein zweites Filterelement 42 angeordnet und mittels Schichten 44 und 45 aus Klebstoff oder Kitt mit diesen verklebt bzw. verkittet. Um eine möglichst geringe Abschwächung des zu transmittierenden Emissionslichts zu gewährleisten, weisen die Schichten 44 und 45 eine hohe Durchlässigkeit für Licht im ersten Wellenlängenbereich W1 des Emissionslichts auf. Vorzugsweise weist das Material der Schicht 44 und/oder 45 außerdem eine niedrige Durchlässigkeit für Licht im zweiten und/oder dritten Wellenlängenbereich W2 bzw. W3 auf. Wie bereits im Zusammenhang mit dem Ausführungsbeispiel der Figur 3 a eingehend erläutert wurde, werden durch die Schichten 44 und 45 Reflexionsverluste an den Grenzflächen zwischen den ersten und zweiten Filterelementen 41 und 43 bzw. 42 und den Schichten 44 bzw. 45 vermindert, so daß auch in diesem Fall eine hohe Durchlässigkeit des Filterelements 8 im ersten Wellenlängenbereich W1 des Emissionslichts gewährleistet ist.

Die beiden ersten Filterelemente 41 und 43 sind vorzugsweise im ersten Wellenlängenbereich W1 des Emissionslichts durchlässig und im zweiten Wellenlängenbereich W2 des Anregungslichts undurchlässig. Das zwischen diesen beiden Filterelementen liegende zweite Filterelement 42 ist ebenfalls im ersten Wellenlängenbereich W1 des Emissionslichts durchlässig und dritten Wellenlängenbereich W3, welcher bei größeren Wellenlängen liegt als der zweite Wellenlängenbereich W2, undurchlässig.

Durch eine solche Kombination von als Absorptionsfilter ausgebildeten Filterelementen mit jeweils unterschiedlichem spektralem Absorptionsverhalten werden die bereits im Zusammenhang mit den Ausführungsbeispielen der Figuren 1 und 2 genannten Vorteile erzielt.

Absorptionsfilter mit unterschiedlichem spektralen Absorptionsverhalten weisen im Allgemeinen unterschiedliche thermische Ausdehnungskoeffizienten auf. In solchen Fällen würde eine Verbindung von zwei oder mehreren unterschiedlichen Filterelementen dazu führen, dass sich die ganze Filtereinrichtung aufgrund der unterschiedlichen thermischen Ausdehnung der Filterelemente bei Temperaturschwankungen verbiegen würde. Dieser bei Bimetallen ausgenutzte Effekt würde bei den hier vorliegenden optischen Anwendungen zu unerwünschten Effekten führen, wie z.B. einem veränderten Absorptionsverhalten aufgrund von Spannungen in den Filterelementen, erhöhten Reflexionsverlusten an den Oberflächen der Filterelemente und Verspannungen in den mit der Filtereinrichtung verbundenen Komponenten der Vorrichtung. Letzteres ist insbesondere bei einer mit einem Detektor verbundenen Filtereinrichtung von Nachteil, da bei einer Verbiegung der Filtereinrichtung entweder der Detektor verbogen wird oder dieser zumindest hohen Spannungen ausgesetzt ist, was dessen Empfindlichkeit und folglich die Zuverlässigkeit beim Erfassen des Emissionslichts herabsetzen kann.

Aus diesem Grund sind bei dem in der Figur 4 a gezeigten Ausführungsbeispiel die beiden ersten Filterelemente 41 und 43 mit jeweils einem ersten thermischen Ausdehnungskoeffizienten und das zweite Filterelement 42 mit einem zweiten thermischen Ausdehnungskoeffizienten derart angeordnet, dass zwei Filterelement-Paare 41/42 und 42/43 mit unterschiedlichen thermischen Ausdehnungskoeffizienten erhalten werden und Biegekräfte, welche bei Temperaturänderungen in den einzelnen Filterelement-Paaren 41/42 und 42/43 auftreten, gegeneinander wirken und sich insbesondere gegenseitig aufheben. Hierdurch wird eine Verbiegung der Filtereinrichtung 8 aufgrund der unterschiedlichen thermischen Ausdehnung der ersten Filterelemente 41 und 43 einerseits und des zweiten Filterelements 42 andererseits verhindert.

In der hier gezeigten symmetrischen Abfolge der Filterelemente 41, 42 und 43 mit unterschiedlichen thermischen Ausdehnungskoeffizienten und Dicke wird erreicht, dass sich etwaige auftretende Bimetall-Effekte der jeweiligen Filterelement-Paare 41/42 bzw. 43/42 auf besonders zuverlässige Weise kompensieren.

Die in Figur 4 b gezeigte Filtereinrichtung 8 ist wie die in Figur 4 a gezeigte aufgebaut, wobei die einzelnen Filterelemente 41, 42 und 43 nicht durch zusätzliche Schichten 44 und 45, sondern durch Ansprengen miteinander verbunden sind. Im übrigen gelten für diese Filtereinrichtung 8 dieselben Ausführungen wie zu dem in Figur 4 a gezeigten Beispiel.

Die in Figur 4 c dargestellte Filtereinrichtung 8 entspricht in ihrem Aufbau ebenfalls im Wesentlichen der in Figur 4 a gezeigten Filtereinrichtung; die Ausführungen zu Figur 4 a gelten entsprechend. Zusätzlich zu den Schichten 44 und 45 sorgt ein im Bereich der Filterelemente 41, 42 und 43 verlaufender Rahmen 46 für einen erhöhten mechanischen Zusammenhalt der einzelnen Filterelemente 41, 42 und 43. Wie bereits im Zusammenhang mit dem in den Figuren 3 c und 3 d gezeigten Ausführungsbeispiel näher erläutert wurde, kann der Rahmen 46 lediglich in einzelnen Teilabschnitten des Randbereichs der Filterelemente 41, 42 und 43, vorzugsweise im Bereich einzelner Ecken, vorgesehen sein.

Zusätzlich zu dem in Figur 4 a gezeigten Filteraufbau weist die Filtereinrichtung 8 der Fig. 4 c eine erste Reflexionsschicht 47 auf, an welcher Licht in einem vierten Wellenlängenbereich W4 größtenteils reflektiert wird, welcher oberhalb des zweiten Wellenlängenbereichs W2 des Anregungslichts liegt und insbesondere mit dem zweiten Wellenlängenbereich W2 teilweise überlappt. Diese erste Reflexionsschicht 47 ist in dem gezeigten Beispiel auf der Außenseite eines der beiden ersten Filterelemente 41 aufgebracht.

Auf der Außenseite des anderen der beiden ersten Filterelemente 43 ist eine zweite Reflexionsschicht 48 aufgebracht, an welcher Licht in einem fünften Wellenlängenbereich W5 größtenteils reflektiert wird, welcher oberhalb des zweiten Wellenlängenbereichs W2 des Anregungslichts liegt und insbesondere mit dem dritten und/oder vierten Wellenlängenbereich W3 bzw. W4 teilweise überlappt.

Wie bereits im Zusammenhang mit der Figur 2 erläutert wurde, wird durch eine oder mehrere zusätzliche Reflexionsschichten 47 bzw. 48 auf den Absorptionsfiltern 41 bis 43 ein besonders hohes Kontrastverhältnis von durchgelassenem Emissionslicht zu durchgelassenen Lichtanteilen in anderen Wellenlängenbereichen erzielt.
Es ist bevorzugt, die Filtereinrichtung 8 in der Weise zwischen Phosphorschicht 1 und Detektor 6 anzuordnen, dass das von der Phosphorschicht 1 ausgehende Licht, welches zunächst neben dem zu erfassenden Emissionslicht 4 noch andere Lichtanteile enthält, zunächst an der zweiten Reflexionsschicht 48 reflektiert wird, bevor es die nachfolgend angeordneten und als Absorptionsfilter ausgebildeten Filterelemente 43, 42 und 41 in der genannten Reihenfolge durchläuft. Hierdurch wird eine Erwärmung der einzelnen Filterelemente, insbesondere des zweiten Filterelements 42, infolge einer Absorption langwelliger, insbesondere infraroter, Strahlungsanteile stark herabgesetzt. Thermische Ausdehnungseffekte werden hierdurch zusätzlich vermindert.

Die Figuren 5 a bis 5 f zeigen Ausführungsbeispiele von aus drei bis fünf Filterelementen zusammengesetzten Filtereinrichtungen.

Die in Figur 5 a gezeigte Filtereinrichtung 8 entspricht in ihrem prinzipiellen Aufbau der in Figur 4 b gezeigten, wobei ein zweites Filterelement 52 mit einem zweiten thermischen Ausdehnungskoeffizienten zwischen zwei ersten Filterelementen 51 und 53 mit jeweils einem ersten thermischen Ausdehnungskoeffizienten angeordnet ist. Im Unterschied zu der in Figur 4 b gezeigten Filtereinrichtung weist hierbei das zweite Filterelement 52 eine größere Dicke auf als die beiden ersten Filterelemente 51 und 53. Auch bei diesen Dickenverhältnissen ist gewährleistet, dass sich in den jeweiligen Filterelement-Paaren 51/52 bzw. 52/55 auftretende Biegekräfte gegenseitig aufheben, wodurch eine Verbiegung der Filtereinrichtung 8 vermieden wird.

Figur 5 b zeigt eine Filtereinrichtung 8, welche aus vier Filterelementen 54 bis 57 zusammengesetzt ist. Die beiden ersten Filterelemente 54 und 57 weisen hierbei einen ersten thermischen Ausdehnungskoeffizienten auf, die beiden zweiten Filterelemente 55 und 56 weisen einen zweiten thermischen Ausdehnungskoeffizienten auf. Durch die symmetrische Abfolge der einzelnen Filterelemente 54 bis 57 mit jeweils unterschiedlichen Ausdehnungskoeffizienten wird ebenfalls eine Verbiegung der Filtereinrichtung 8 vermieden, da sich die in den einzelnen Filterelement-Paaren 54/55 und 56/57 auftretenden Biegekräfte gerade aufheben.
Für die in Figur 5 c dargestellte Filtereinrichtung 8 gelten die Ausführungen zu dem in Figur 5 b dargestellten Beispiel entsprechend, wobei lediglich die Dicken der ersten und zweiten Filterelemente 55 und 56 bzw. 54 und 57 in umgekehrtem Verhältnis zueinander stehen.

Für eine besonders zuverlässige Kompensation etwaiger Biegekräfte ist es erforderlich, dass die Dicken der ersten Filterelemente 54 und 57 in derselben Größenordnung liegen, insbesondere gleich sind, und die Dicken der zweiten Filterelemente 55 und 56 in derselben Größenordnung liegen, insbesondere gleich sind.

Figur 5 d zeigt ein weiteres Ausführungsbeispiel einer Filtereinrichtung 8, welche aus fünf Filterelementen 61 bis 65 zusammengesetzt ist. Die beiden ersten Filterelemente 61 und 65 weisen einen ersten Ausdehnungskoeffizienten, die beiden zweiten Filterelemente 62 und 64 weisen einen zweiten Ausdehnungskoeffizienten, und das dritte Filterelement 63 weist einen dritten Ausdehnungskoeffizienten auf. Auch in diesem Beispiel sind die einzelnen Filterelemente 61 und 65, 62 und 64 sowie 63 mit jeweils unterschiedlichen thermischen Ausdehnungskoeffizienten derart in symmetrischer Abfolge angeordnet, dass sich etwaige Biegekräfte in den Filterelemente-Paaren 61/62, 62/63, 63/64 und 64/65 kompensieren, wodurch eine thermisch bedingte Verbiegung der Filtereinrichtung 8 verhindert wird.

Die ersten und zweiten Filterelemente 61 und 65 bzw. 62 und 64 sind in diesem Beispiel symmetrisch um das dritte Filterelement 63 angeordnet. Außerdem weist das dritte Filterelement 63 einen dritten thermischen Ausdehnungskoeffizienten auf, welcher von dem ersten und zweiten Ausdehnungskoeffizienten der ersten und zweiten Filterelemente 61 und 65 bzw. 62 und 64 verschieden ist. Alternativ kann das dritte Filterelement aber auch einen thermischen Ausdehnungskoeffizienten haben, welcher mit dem ersten oder zweiten thermischen Ausdehnungskoeffizienten der ersten und zweiten Filterelemente 61 und 65 bzw. 62 und 64 identisch ist. Die Kompensation der Biegekräfte ist auch bei dieser alternativen Ausgestaltung weiter gewährleistet.

Für die in Figur 5 e gezeigte Filtereinrichtung 8 gelten die Ausführungen zu dem in Figur 5 d gezeigten Beispiel entsprechend, wobei in Abwandlung desselben umgekehrte Verhältnisse in den Dicken der ersten, zweiten und dritten Filterelemente 61 und 65 bzw. 63 und 64 bzw. 63 gewählt wurden. Wie bereits vorstehend ausgeführt, wird auch in diesem Fall eine besonders zuverlässige Kompensation von Biegekräften erreicht, wenn die Dicken der ersten und/oder zweiten Filterelemente 61 und 65 bzw. 62 und 64 jeweils in derselben Größenordnung liegen, insbesondere wenn diese Dicken gleich sind.

Figur 5 f zeigt ein weiteres Ausführungsbeispiel für eine Filtereinrichtung aus einem ersten Filterelement 71 mit einem ersten thermischen Ausdehnungskoeffizienten α1, einem zweiten Filterelement 72 mit einem zweiten thermischen Ausdehnungskoeffizienten α2 und einem dritten Filterelement 73 mit einem dritten thermischen Ausdehnungskoeffizienten α3, wobei der erste Ausdehnungskoeffizient α1 kleiner ist als der zweite Ausdehungskoeffizient α2 und der zweite Ausdehungskoeffizient kleiner ist als der dritte Ausdehnungskoeffizient α3:
α1 < α2 < α3. Die Abfolge der einzelnen Filterelemente ist so gewählt, daß Biegekräfte in den einzelnen Filterelemente-Paaren 71/72, und 71/73 gegeneinander wirken und sich insbesondere gegenseitig aufheben. Wie der vorliegende Fall zeigt, ist hierbei die Abfolge der thermischen Ausdehnungskoeffizienten α3, α1 und α2 der einzelnen Filterelemente 73, 71 und 72 nicht symmetrisch. Auch die Abfolge der Dicken der einzelnen Filterelemente 73, 71 und 72 muß nicht symmetrisch sein. Für eine ausreichende Kompensation der Biegekräfte ist es ausreichend, wenn die Dicken der einzelnen Filterelemente 73, 71 und 72 in derselben Größenordnung liegen.

In den Beispielen der Figuren 5 a bis 5 f wurde auf die explizite Darstellung von Schichten mit Kleber bzw. Kitt und Rahmen aus Gründen der Anschaulichkeit verzichtet. Generell können die einzelnen Filterelemente in diesen Beispielen durch jede der oben näher beschriebenen Möglichkeiten der Verbindung, wie z. B. Kleben, Verkitten, Ansprengen und/oder mittels eines Rahmens, miteinander verbunden werden.

## Patentansprüche

1. Vorrichtung zum Erfassen von in einer Phosphorschicht enthaltenen Informationen mit
- einer Lichtquelle (2) zur Bestrahlung der Phosphorschicht (1) mit Anregungslicht (3), welches zur Anregung von Emissionslicht (4) in der Phosphorschicht (1) geeignet ist,
- einem Detektor (6) zum Erfassen von in der Phosphorschicht (1) angeregtem Emissionslicht (4) und
- einer zwischen der Phosphorschicht (1) und dem Detektor (6) angeordneten Filtereinrichtung (8), welche in einem ersten Wellenlängenbereich (W1) des Emissionslichts (4) durchlässig und in einem zweiten Wellenlängenbereich (W2), welcher das Anregungslicht (3) umfasst, undurchlässig ist,
wobei die Filtereiririchtung (8) in mindestens einem dritten Wellenlängenbereich (W3) undurchlässig ist, welcher bei größeren Wellenlängen liegt als der zweite Wellenlängenbereich (W2) des Anregungslichts (3),
**dadurch gekennzeichnet, dass**
die Filtereinrichtung (8) mindestens zwei Filterelemente (31, 32; 41 -43; 51 - 57; 61 - 65; 71 - 73) sowie eine erste Reflexionsschicht (47) umfasst, wobei
- mindestens ein erstes der Filterelemente (31; 41, 43; 51, 53; 54, 57; 61, 65; 72, 73) im ersten Wellenlängenbereich (W1) des Emissionslichts (4) durchlässig und im zweiten Wellenlängenbereich (W2) des Anregungslichts (3) undurchlässig ist, wobei die Durchlässigkeit zu höheren Wellenlängen wieder ansteigt,
- mindestens ein zweites der Filterelemente (32; 42; 52; 55, 56; 62, 64; 71) im ersten Wellenlängenbereich (W1) des Emissionslichts (4) durchlässig und erst im dritten Wellenlängenbereich (W3), welcher bei größeren Wellenlängen liegt als der zweite Wellenlängenbereich (W2) des Anregungslichts (3), undurchlässig ist,
- die erste Reflexionsschicht (47) für Licht in einem vierten Wellenlängenbereich (W4) undurchlässig ist, welcher bei größeren Wellenlängen liegt als der zweite Wellenlängenbereich (W2) und welcher mit dem zweiten Wellenlängenbereich (W2) teilweise überlappt, so dass die Durchlässigkeit der Filtereinrichtung (8) in dem zwischen dem zweiten und dritten Wellenlängenbereich (W2 bzw. W3) liegenden Wellenlängenbereich zusätzlich herabgesetzt wird,
- die Filterelemente (31, 32; 41-43; 51-57; 61-65; 71-73) als Absorptionsfilter ausgebildet sind, in welchen Licht im zweiten Wellenlängenbereich (W2) bzw. im dritten Wellenlängenbereich (W3) absorbiert wird,
- die erste Reflexionsschicht (47) ein Schichtsystem aus mehreren dünnen dielektrischen Schichten ist.

2. Vorrichtung nach Anspruch 1 wobei die Filtereinrichtung (8) eine zweite Reflexionsschicht (48) aufweist, welche für Licht in einem fünften Wellenlängenbereich (W5) undurchlässig ist, welcher bei größeren Wellenlängen liegt als der zweite Wellenlängenbereich (W2) und welcher insbesondere mit dem dritten Wellenlängenbereich (W3) und/oder vierten Wellenlängenbereich (W4) teilweise überlappt.

3. Vorrichtung nach einem der vorangehenden Ansprüche, wobei die Filtereinrichtung (8) bei Wellenlängen im ersten Wellenlängenbereich (W1) einen Transmissionsgrad (T) aufweist, welcher größer ist als 0,1, insbesondere größer ist als 0,7.

4. Vorrichtung nach einem der vorangehenden Ansprüche, wobei die Filtereinrichtung (8) bei Wellenlängen im zweiten Wellenlängenbereich (W2) und/oder dritten Wellenlängenbereich (W3) einen Transmissionsgrad (T) aufweist, welcher kleiner ist als 10⁻³, insbesondere kleiner ist als 10⁻⁴.

5. Vorrichtung nach einem der vorangehenden Ansprüche, wobei die Filterelemente (31, 32; 41 - 43; 51 - 57; 61 - 65; 71 - 73) miteinander verbunden sind.

6. Vorrichtung nach Anspruch 5, wobei mindestens zwei der Filterelemente (31, 32; 41 - 43; 51 - 57; 61 - 65; 71 - 73) durch Kleben miteinander verbunden sind.

7. Vorrichtung nach Anspruch 5, wobei mindestens zwei der Filterelemente (31, 32; 41 - 43; 51 - 57; 61 - 65; 71 - 73) durch Ansprengen miteinander verbunden sind.

8. Vorrichtung nach einem der vorangehenden Ansprüche, wobei mindestens zwei der Filterelemente (31, 32; 41 - 43; 51 - 57; 61 - 65; 71 - 73) durch eine Halteeinrichtung zusammengehaiten werden.

9. Vorrichtung nach Anspruch 8, wobei die Halteeinrichtung als ein im Randbereich der Filterelemente (31, 32; 41 - 43; 51 - 57; 61 - 65; 71 - 73) verlaufender Rahmen (34, 46) ausgebildet ist.

10. Vorrichtung nach einem der vorangehenden Ansprüche, wobei die Filtereinrichtung (8) am Detektor (6) angebracht ist.

## Claims

1. A device for reading information contained in a phosphor layer, said device comprising
- a light source (2) for irradiating the phosphor layer (1) with stimulation light (3) that is suitable for stimulating emission light (4) in the phosphor layer (1),
- a detector (6) for detecting emission light (4) that has been stimulated in the phosphor layer (1) and
- a filter device (8), arranged between the phosphor layer (1) and the detector (6), that is transparent in a first wavelength range (W1) of the emission light (4) and non-transparent in a second wavelength range (W2) comprising the stimulation light (3),
wherein said filter device (8) is non-transparent in at least a third wavelength range (W3), which is located at longer wavelengths than the second wavelength range (W2) of the stimulation light (3),
**characterised in that**
said filter device (8) comprises at least two filter elements (31, 32; 41 - 43; 51 - 57; 61 - 65; 71 - 73) as well as a first reflection layer (47), wherein
- at least a first one of the filter elements (31; 41, 43; 51, 53; 54, 57; 61, 65; 72, 73) is transparent in the first wavelength range (W1) of the emission light (4) and non-transparent in the second wavelength range (W2) of the stimulation light (3), the transparency increasing again towards longer wavelengths,
- at least a second one of the filter elements (32; 42; 52; 55, 56; 62, 64; 71) is transparent in the first wavelength range (W1) of the emission lights (4) and non-transparent only just in the third wavelength range (W3), which is located at longer wavelengths than the second wavelength range (W2) of the stimulation light (3),
- the first reflection layer (47) is non-transparent to light in a fourth wavelength range (W4), which is located at longer wavelengths than the second wavelength range (W2) and overlaps partially with the second wavelength range (W2), so that the transparency of the filter device (8) in the wavelength range located between the second and the third wavelength ranges (W2 and W3) is additionally reduced,
- the filter elements (31, 32; 41 - 43; 51 - 57; 61 - 65; 71 - 73) are designed as absorption filters, in which light in the second wavelength range (W2) or in the third wavelength range (W3) is absorbed,
- the first reflection layer (47) is a layer system consisting of several thin dielectric layers.

2. Device according to claim 1, wherein the filter device (8) exhibits a second reflection layer (48) which is non-transparent to light in a fifth wavelength range (W5), which is located at longer wavelengths than the second wavelength range (W2) and which partially overlaps in particular with the third wavelength range (W3) and/or fourth wavelength range (W4).

3. Device according to any of the preceding claims, wherein the filter device (8) at wavelengths in the first wavelength range (W1) exhibits a transmittance (T) which is greater than 0.1, in particular greater than 0.7.

4. Device according to any of the preceding claims, wherein the filter device (8) at wavelengths in the second wavelength range (W2) and/or third wavelength range (W3) exhibits a transmittance (T) which is less than 10⁻³, in particular less than 10⁻⁴.

5. Device according to any of the preceding claims, wherein the filter elements (31, 32; 41 - 43; 51 - 57; 61 - 65; 71 - 73) are joined to each other.

6. Device according to claim 5, wherein at least two of the filter elements (31, 32; 41 - 43; 51 - 57; 61 - 65; 71 - 73) are joined to each other by gluing.

7. Device according to claim 5, wherein at least two of the filter elements (31, 32; 41 - 43; 51 - 57; 61 - 65; 71 - 73) are joined to each other by wringing.

8. Device according to any of the preceding claims, wherein at least two of the filter elements (31, 32; 41 - 43; 51 - 57; 61 - 65; 71 - 73) are held together by a holding device.

9. Device according to claim 8, wherein the holding device is shaped as a frame (34, 46) running along the edge area of the filter elements (31, 32; 41 - 43; 51 - 57; 61 - 65; 71 - 73).

10. Device according to any of the preceding claims, wherein the filter device (8) is mounted on the detector (6).

## Revendications

1. Dispositif pour la saisie d'informations contenues dans une couche de phosphore comprenant
- une source lumineuse (2) pour l'irradiation de la couche de phosphore (1) avec de la lumière d'excitation (3), qui est appropriée pour l'excitation de lumière d'émission (4) dans la couche de phosphore (1),
- un détecteur (6) pour la saisie de la lumière d'émission (4) excitée dans la couche de phosphore (1) et
- un dispositif filtrant (8) disposé entre la couche de phosphore (1) et le détecteur (6), qui est transparent dans une première plage de longueurs d'onde (W1) de la lumière d'émission (4) et est opaque dans une seconde plage de longueurs d'onde (W2), qui comprend la lumière d'excitation (3),
- le dispositif filtrant (8) étant opaque dans au moins une troisième plage de longueurs d'onde (W3), qui se situe sur des longueurs d'onde plus grandes que la seconde plage de longueurs d'onde (W2) de la lumière d'excitation (3),
**caractérisé en ce que**
le dispositif filtrant (8) comprend au moins deux éléments filtrants (31, 32, 41 - 43 ; 51 - 57 ; 61 - 65 ; 71 - 73) et une première couche de réflexion (47),
- au moins un premier des éléments filtrants (31; 41, 43 ; 51 ; 54, 57 ; 61, 65 ; 72, 73) étant transparent dans la première plage de longueurs d'onde (W1) de la lumière d'émission (4) et opaque dans la seconde plage de longueurs d'onde (W2) de la lumière d'excitation (3), la perméabilité croissant à nouveau vers des longueurs d'onde plus élevées,
- au moins un second des éléments filtrants (32 ; 42 ; 52 ; 55, 56 ; 62, 64 ; 71) étant transparent dans la première plage de longueurs d'onde (W1) de la lumière d'émission (4) et étant opaque seulement dans la troisième plage de longueurs d'onde (3), qui se situe sur des longueurs d'onde plus grandes que la seconde plage de longueurs d'onde (W2) de la lumière d'excitation (3),
- la première couche de réflexion (47) étant opaque à la lumière dans une quatrième plage de longueurs d'onde (W4) qui se situe sur des longueurs d'onde plus grandes que la seconde plage de longueurs d'onde (W2) et qui coïncide en partie avec la seconde plage de longueurs d'onde (W2), de sorte que la perméabilité du dispositif filtrant (8) est abaissée en supplément dans la plage de longueurs d'onde située entre la seconde et la troisième plage de longueurs d'onde (W2) ou (W3)
- les éléments filtrants (31, 32 ; 41 - 43 ; 51 - 57 ; 61 - 65 ; 71 - 73) étant conçus comme des filtres d'absorption dans lesquels de la lumière est absorbée dans la seconde plage de longueurs d'onde (W2) et dans la troisième plage de longueurs d'onde (W3),
- la première couche de réflexion (47) étant un système de couche constitué de plusieurs couches minces diélectriques.

2. Dispositif selon la revendication 1, le dispositif filtrant (8) présentant une seconde couche de réflexion (48) qui est opaque à la lumière dans une cinquième plage de longueurs d'onde (W5) qui se situe sur des longueurs d'onde plus grandes que la seconde plage de longueurs d'onde (W2) et qui coïncide partiellement en particulier avec la troisième plage de longueurs d'onde (W3) et/ou la quatrième plage de longueurs d'onde (W4).

3. Dispositif selon l'une quelconque des revendications précédentes, le dispositif filtrant (8) présentant, dans le cas de longueurs d'onde situées dans la première plage de longueurs d'onde (W1), un degré de transmission (T) qui est supérieur à 0,1, en particulier supérieur à 0,7.

4. Dispositif selon l'une quelconque des revendications précédentes, le dispositif filtrant (8) présentant, dans le cas de longueurs d'onde situées dans la seconde plage de longueurs d'onde (W2) et/ou la troisième plage de longueurs d'onde (W3), un degré de transmission (T) qui est inférieur à 10⁻³, en particulier inférieur à 10⁻⁴.

5. Dispositif selon l'une quelconque des revendications précédentes, les éléments filtrants (31, 32 ; 41 - 43 ; 51 - 57 ; 61 - 65 ; 71 - 73) étant reliés entre eux.

6. Dispositif selon la revendication 5, au moins deux des éléments filtrants (31, 32 ; 41 - 43 ; 51 - 57 ; 61 - 65 ; 71 - 73) étant reliés entre eux par collage.

7. Dispositif selon la revendication 5, au moins deux des éléments filtrants (31, 32 ; 41 - 43 ; 51 - 57 ; 61 - 65 ; 71 - 73) étant reliés entre eux par accolement.

8. Dispositif selon l'une quelconque des revendications précédentes, au moins deux des éléments filtrants (31, 32 ; 41 - 43 ; 51 - 57 ; 61 - 65 ; 71 - 73) étant maintenus ensemble par un dispositif de retenue.

9. Dispositif selon la revendication 8, le dispositif de retenue étant conçu comme un cadre (34, 46) agencé dans la zone de bordure des éléments filtrants (31, 32 ; 41 - 43 ; 51 - 57 ; 61 - 65 ; 71 - 73).

10. Dispositif selon l'une quelconque des revendications précédentes, le dispositif filtrant (8) étant placé sur le détecteur (6).
